# EUROPEAN PATENT APPLICATION

(11) **EP 4 800 814 A1**
(43) Date of publication of application: **02.09.2026**
(21) Application number: 25816898.8
(22) Date of filing: 30.06.2025
(51) Int. Cl.: H01M 50/145, H01M 50/291, H01M 50/249, H01M 10/625, H01M 10/6567, B60L 50/64

(54) **CELL BLOCK, AND BATTERY PACK AND VEHICLE INCLUDING SAME**

(30) Priority: 15.10.2024 KR 20240140298
(71) Applicant: LG ENERGY SOLUTION, LTD., Seoul 07335 (KR)
(72) Inventor: JANG, Sunghwan, Daejeon 34122 (KR); PARK, Myungki, Daejeon 34122 (KR)
(74) Representative: Plasseraud IP
(86) International application number: PCT/KR2025/009181
(87) International publication number: WO 2026/084179

(57) **Abstract**

A cell block according to an embodiment of the present disclosure includes: a cell assembly including a plurality of battery cells and having a corrosion protection layer on a surface; a lower housing having a space therein to accommodate the cell assembly; a cooling liquid accommodated in the lower housing; an upper housing on top of the lower housing and including at least one venting hole; and a sealing bracket between the lower housing and the upper housing and sealing a space between an outer surface of the cell assembly and an inner surface of the lower housing.

## Description

### Technical Field

The present disclosure relates to a cell block and a battery pack and a vehicle including the same.

### Background

Secondary batteries refer to batteries that are chargeable and dischargeable, unlike primary batteries that are not chargeable, and are applied not only to portable devices but also to electric vehicles (EVs), hybrid electric vehicles (HEVs), and the like driven by electric drive sources.

Types of secondary batteries currently in widespread use include lithium-ion batteries, lithium polymer batteries, nickel-cadmium batteries, nickel-metal hydride batteries, nickel-zinc batteries, and the like. An operating voltage of such a unit secondary battery cell, i.e., a unit battery cell, is about 2.5 V to 4.6 V. Therefore, when a higher output voltage is required, a plurality of battery cells are connected in series to configure a battery pack. In addition, a plurality of battery cells may be connected in parallel to configure a battery pack according to the charge/discharge capacity required for a battery pack. Accordingly, the number of battery cells included in the battery pack may be set variously according to the required output voltage or charge/discharge capacity.

When configuring a battery pack by connecting a plurality of battery cells in series or in parallel, in general, a battery module including at least one battery cell, preferably a plurality of battery cells, is first configured, and then a battery pack is configured by adding other components while using the at least one battery module. Here, the battery module refers to a component in which a plurality of battery cells are connected in series or in parallel, and the battery pack refers to a component in which a plurality of battery modules are connected in series or in parallel to increase a capacity, an output, and the like.

Note that the need for satisfying high-speed charging and ensuring thermal propagation safety of battery packs according to customer needs is increasing. However, in the case of battery modules or packs of the related art, there is a problem in that high-speed charging performance is reduced because generated heat is controlled mainly through indirect cooling such as edge cooling.

On the other hand, in order to apply a direct cooling method to improve high-speed charging performance, a sealing structure must be secured. However, such a sealing structure has a problem in that it is difficult to ensure safety due to thermal propagation when a thermal event occurs. That is, in a direct cooling structure using immersion in a cooling liquid, it is essential to seal the entire cell block so that the insulating cooling liquid remains inside the cell block. However, if the entire cell block is sealed in this way, there is a problem in that a risk of cell block explosion significantly increases because there is no space into which high-temperature gas is vented when a thermal event occurs.

In addition, with the direct cooling method as described above, there is a problem in that corrosion of the battery cell may be accelerated due to direct contact between the battery cell and the cooling liquid. The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### Summary

Therefore, an object of the present disclosure is to effectively prevent corrosion of a battery cell in a direct cooling method.

In addition, another object of the present disclosure is to improve high-speed charging performance of a cell block.

In addition, still another object of the present disclosure is to improve cooling performance by applying a direct cooling structure.

In addition, yet another object of the present disclosure is to ensure safety by smoothly discharging venting gas to the outside of a cell block when a thermal event occurs.

However, the technical problems to be solved by the present disclosure are not limited to those described above, and other problems not explicitly mentioned will be apparent to those skilled in the art from the following description of the disclosure.

To solve the above problems, a cell block according to an embodiment of the present disclosure includes: a cell assembly including a plurality of battery cells and having a corrosion protection layer on a surface; a lower housing having a space therein accommodating the cell assembly; a cooling liquid accommodated in the lower housing; an upper housing mounted on top of the lower housing and including at least one venting hole; and a sealing bracket between the lower housing and the upper housing and sealing a space between an outer surface of the cell assembly and an inner surface of the lower housing.

In an aspect of the present disclosure, the corrosion protection layer may be on surfaces of the battery cells.

For example, the corrosion protection layer may be a film attached to surfaces of the battery cells.

For example, the corrosion protection layer may be coated on surfaces of the battery cells.

In another aspect of the present disclosure, the corrosion protection layer may cover all side surfaces of the battery cells.

In still another aspect of the present disclosure, the corrosion protection layer may surround the individual battery cells.

In an aspect of the present disclosure, the lower housing may include a first space in which the cooling liquid is accommodated, and a second space in which the cooling liquid is not accommodated, and the first space and the second space may be partitioned by the sealing bracket.

In another aspect of the present disclosure, the sealing bracket may be in a region above a surface of the cooling liquid.

In still another aspect of the present disclosure, the sealing bracket may include a base portion having a receiving portion configured to allow the cell assembly to pass therethrough, and a sealing portion in contact with the inner surface of the lower housing and sealing the first space.

Preferably, the corrosion protection layer may be only in the first space.

In an aspect of the present disclosure, the receiving portion may seal the first space.

In another aspect of the present disclosure, an edge of the sealing bracket may be bent toward the second space.

In still another aspect of the present disclosure, the corrosion protection layer may wrap around a side surface of the cell assembly as a single unit.

Note that the present disclosure provides a battery pack including at least one battery cell according to the above-described embodiment.

Furthermore, the present disclosure provides a vehicle including at least one battery pack according to the above-described embodiment.

According to the present disclosure, corrosion of a battery cell can be effectively prevented even when a direct cooling method is used.

In addition, according to the present disclosure, the high-speed charging performance of a cell block can be improved.

In addition, according to the present disclosure, cooling performance can be improved by applying a direct cooling structure.

In addition, according to the present disclosure, safety can be ensured by smoothly discharging venting gas to the outside of a cell block when a thermal event occurs.

However, the effects achieved by the present disclosure are not limited to those described above, and other technical effects not explicitly mentioned will be apparent to those skilled in the art from the following description of the disclosure.

### Brief Description of the Drawings

The accompanying drawings illustrate embodiments of the present disclosure and, together with the following description of the disclosure, serve to provide a better understanding of the technical features of the present disclosure, and thus the present disclosure should not be construed as being limited to the drawings.
FIG. 1 is a diagram illustrating a cell block according to an embodiment of the present disclosure.
FIG. 2 is an exploded perspective view of FIG. 1.
FIG. 3 is a diagram illustrating a battery cell included in a cell assembly according to an embodiment of the present disclosure.
FIG. 4 is a diagram illustrating a corrosion protection layer according to an embodiment of the present disclosure.
FIG. 5 is a diagram illustrating a corrosion protection layer according to another embodiment of the present disclosure.
FIG. 6 is a diagram illustrating a structure in which a corrosion protection layer is applied to a cell assembly according to an embodiment of the present disclosure.
FIG. 7 is a diagram illustrating a sealing bracket applied to the cell assembly of FIG. 6.
FIG. 8 is a diagram illustrating a structure in which a corrosion protection layer is applied to a cell assembly according to another embodiment of the present disclosure.
FIG. 9 is a diagram illustrating a sealing bracket applied to the cell assembly of FIG. 8.
FIG. 10 is a diagram illustrating an application structure of a sealing bracket according to an embodiment of the present disclosure.
FIG. 11 is a cross-sectional view of the cell block of FIG. 1 taken along line A-A'.
FIG. 12 is a cross-sectional view of the cell block of FIG. 1 taken along line B-B'.
FIG. 13 is a diagram illustrating a corrosion protection layer according to still another embodiment of the present disclosure.
FIG. 14 is a diagram illustrating a battery pack including the cell block of FIG. 1.
FIG. 15 is a diagram illustrating a vehicle including the battery pack of FIG. 14.

### Detailed Description

The advantages and features of the present disclosure, and a method for achieving the same will become apparent with reference to embodiments described in detail below together with the accompanying drawings. However, the present disclosure is not limited to the embodiments disclosed below, but can be implemented in a variety of different forms. The embodiments are provided to only complete the present disclosure and to allow one skilled in the art to which the present disclosure belongs to completely understand the category of the present disclosure. The present disclosure is only defined by the category of the claims. Thus, in some embodiments, well-known process steps, well-known device structures, and well-known technologies have not been specifically described in order to avoid obscuring the interpretation of the present disclosure. Like reference numbers designate like elements throughout the specification.

In the drawings, the thicknesses of layers and regions are exaggerated for clarity. Like reference numerals have been assigned to like elements throughout the specification. When an element such as a layer, a film, a region, a plate, or the like is referred to as being "on" another element, it may be "directly on" another element or an intervening element may also be present. Conversely, when an element is referred to as being "directly on" another element, it may mean that there is no intervening element present. In addition, when an element such as a layer, a film, a region, a plate, or the like is referred to as being "below" another element, it may be "directly below" another element or an intervening element may also be present. Conversely, when an element is referred to as being "directly below" another element, it may mean that there is no intervening element present.

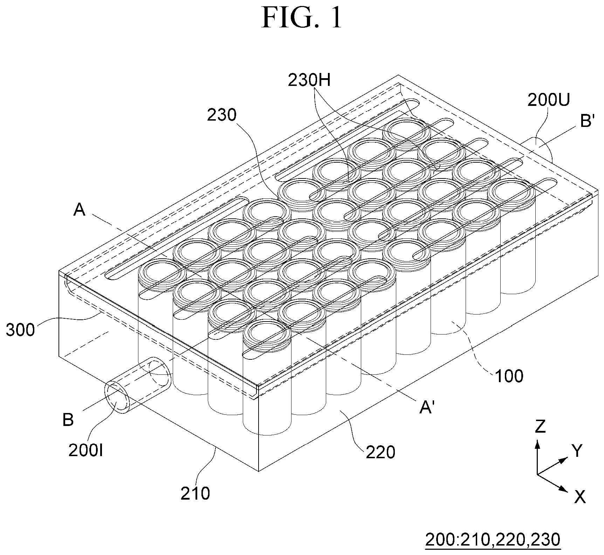

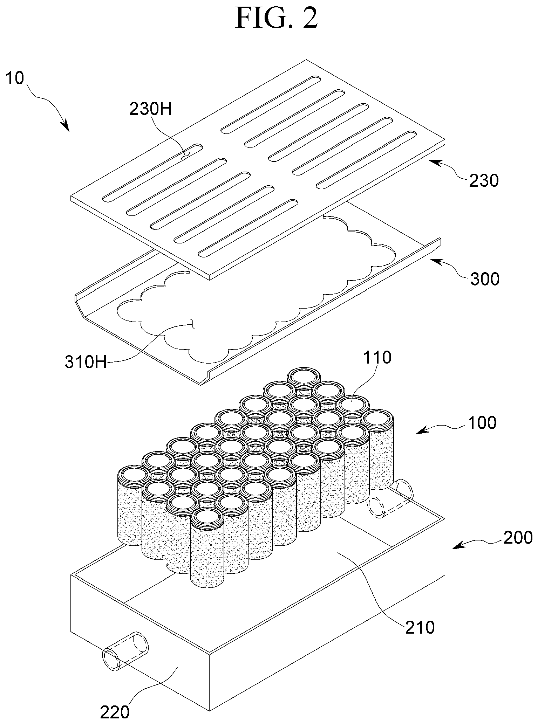

FIG. 1 is a diagram illustrating a cell block 10 according to an embodiment of the present disclosure, and FIG. 2 is an exploded perspective view of FIG. 1.

Referring to FIGS. 1 and 2, the cell block 10 according to an embodiment of the present disclosure includes a cell assembly 100, a lower housing 200, a cooling liquid C, an upper housing 230, and a sealing bracket 300.

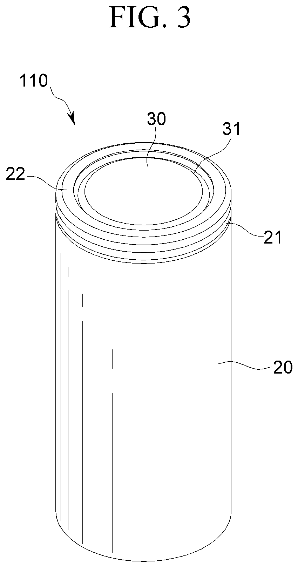

FIG. 3 is a diagram illustrating the battery cell 110 included in the cell assembly 100 according to an embodiment of the present disclosure.

The cell assembly 100 includes a plurality of battery cells 110. Referring to FIG. 3, the battery cell 110 may be a secondary battery, and may be, for example, a cylindrical battery cell 110. However, the type of battery cell 110 is not limited thereto. For example, other types of battery cells 110, such as pouch-type cell or prismatic cells, may also be employed in the cell block 10 of the present disclosure. The battery cell 110 of the present disclosure can be applied without restrictions on the cell form-factor.

Hereinafter, as shown in FIG. 3, an example will be described in which the battery cell 110 is a cylindrical cell. Referring to FIG. 3, the battery cell 110 includes an electrode assembly, a battery housing 20, and a top cap 30.

The electrode assembly includes a first electrode tab and a second electrode tab. Specifically, the electrode assembly includes a first electrode, a second electrode, and a separator interposed therebetween. The electrode assembly has a structure in which a first electrode, a second electrode, and a separator interposed therebetween are wound around a winding axis, thereby defining a core and an outer peripheral surface. That is, the electrode assembly applied to the present disclosure may be a jelly-roll type electrode assembly. In this case, an additional separator may be provided on the outer peripheral surface of the electrode assembly for insulation from the battery housing 20. The electrode assembly may have, without limitation, a winding structure well known in the art. Note that, in the present disclosure, a positive electrode active material coated on a positive electrode plate and a negative electrode active material coated on a negative electrode plate may be used without limitation as long as they are active materials known in the art.

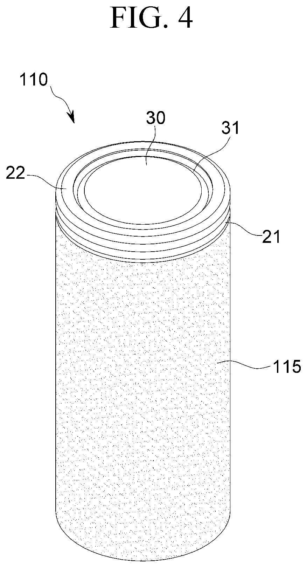

Referring to FIGS. 3 and 4, the battery housing 20 is a substantially cylindrical receiving body having an opening portion formed on one side, and is made of a conductive metal material. A side surface of the battery housing 20 and a lower surface located opposite the opening portion are usually formed integrally. That is, the battery housing 20 generally has an open upper end in a height direction and a closed lower end. The lower surface of the battery housing 20 may have a substantially flat shape. The battery housing 20 accommodates the electrode assembly through the opening portion formed on one side in the height direction. The battery housing 20 may also accommodate an electrolyte through the opening portion.

The battery housing 20 may have a beading portion 21 formed at an end portion adjacent to the opening portion provided at the upper end of the battery housing 20. The battery housing 20 may further include a crimping portion 22 formed on the beading portion 21. The beading portion 21 has a shape in which the outer peripheral surface of the battery housing 20 is recessed to a predetermined depth. More specifically, the beading portion 21 may have a shape that is recessed inwardly in a region between the opening portion formed on one side of the battery housing 20 and a receiving portion 310H that receives the electrode assembly. The beading portion 21 is formed above the electrode assembly. An inner diameter of the battery housing 20 in the region where the beading portion 21 is formed is formed smaller than a diameter of the electrode assembly.

The beading portion 21 provides a support surface on which the top cap 30 can be seated. Additionally, the beading portion 21 may provide a support surface on which at least a part of a peripheral edge of a current collector (not shown) can be seated and coupled. That is, at least a part of a peripheral edge of the current collector (not shown) of the present disclosure and/or a peripheral edge of the top cap 30 may be seated on an upper surface of the beading portion 21. In order to stably support at least a part of a peripheral edge of the current collector (not shown) and/or a peripheral edge of the top cap 30, the upper surface of the beading portion 21 may have a shape extending along a direction substantially parallel to the lower surface of the battery housing 20, that is, along a direction substantially perpendicular to a side wall of the battery housing 20.

The beading portion 21 prevents an electrode assembly having a size substantially corresponding to an inner diameter of the battery housing 20 from coming out through the opening portion formed at the upper end of the battery housing 20, and may function as a support portion on which the top cap 30 is seated. The upper beading portion 21 may function as a support portion for securing not only the top cap 30, but also the current collector (not shown), a sealing gasket, and the like.

The crimping portion 22 is formed on an upper portion of the beading portion 21. The crimping portion 22 has an extended and bent shape to surround a peripheral edge of the top cap 30 arranged on the upper portion of the beading portion 21. The top cap 30 is fixed onto the beading portion 21 by the shape of the crimping portion 22.

Referring to FIG. 3, the top cap 30 may have a venting portion 31 formed to prevent an increase in internal pressure due to gas generated inside the battery housing 20. The venting portion 31 may be configured to rupture when the internal pressure of the battery housing 20 exceeds a predetermined level. For example, the venting portion 31 may be a region that is formed on a part of the top cap 30 and is structurally weaker than a surrounding region so as to be easily ruptured when internal pressure is applied. The venting portion 31 may be, for example, a region having a thinner thickness compared to the surrounding region.

That is, under certain conditions, a thermal event may occur inside the battery cell 110, thereby generating venting gas, which in turn may increase the pressure inside the battery housing 20. In this case, since the venting portion 31 is a structurally weaker region than the surrounding area so as to be easily ruptured when the internal pressure of the battery cell 110 increases, the venting portion 31 may be ruptured when venting gas is generated.

Referring to FIG. 3, the top cap 30 covers the opening portion formed on one side of the battery housing 20. The top cap 30 may be fixed by the crimping portion 22 formed at the upper end of the battery housing 20. In this case, a sealing gasket may be interposed between the battery housing 20 and the top cap 30 and between the current collector (not shown) and the top cap 30, in order to enhance the fixing force and the sealing performance of the battery housing 20. In this case, a contact portion (not shown) may be interposed between the beading portion 21 of the battery housing 20 and the sealing gasket. The contact portion (not shown) interposed between the beading portion 21 and the sealing gasket in this manner may be fixed by bending of the crimping portion 22 extending upward from the beading portion 21.

Referring to FIG. 3, the venting portion 31 may be configured to form a substantially circular closed loop. Accordingly, when venting gas is ejected from the inside of the battery cell 110 and upward internal pressure is thereby applied to the top cap 30, the venting portion 31 may be ruptured, causing an inner region of the circular closed loop of the top cap 30 to be torn off. Accordingly, smooth venting can be achieved.

FIG. 4 is a diagram illustrating a corrosion protection layer 115 according to an embodiment of the present disclosure.

As an embodiment of the present disclosure, the cell assembly 100 may have the corrosion protection layer 115 on its surface. For example, referring to FIG. 4, the battery cell 110 may have the corrosion protection layer 115 on its surface. The corrosion protection layer 115 may be provided on a surface that comes into direct contact with a cooling liquid C.

The cooling liquid C may be composed of components such as insulating oil, for example. In this case, the corrosion protection layer 115 prevents direct contact of the battery cell 110 with the cooling liquid C. The corrosion protection layer 115 may include any material that prevents corrosion when coming into contact with the cooling liquid C. The corrosion protection layer 115 may include a stable material configured not to chemically react with the cooling liquid C. For example, the corrosion protection layer 115 may include a polymer resin material, a ceramic material, a metal material, a glass material, a carbon fiber material, or the like. In particular, the polymer resin material of the corrosion protection layer 15 may include epoxy resin (epoxy powder coating, and the like), fluororesin (PTFE, PFA, FEP), polyethylene (PE), polypropylene (PP), polyvinylidene fluoride (PVDF), or the like. However, no such limitation is intended. With this configuration, corrosion of the cell assembly 100 can be effectively prevented.

In another aspect of the present disclosure, the corrosion protection layer 115 may be configured in a film form and attached to the surface of the battery cell 110. Alternatively, the corrosion protection layer 115 may be configured to be coated on the surface of the battery cell 110. In this way, the corrosion protection layer 115 falls within the scope of the present disclosure as long as it has a structure and/or material capable of preventing direct contact of the battery cell 110 with the cooling liquid C.

In still another aspect of the present disclosure, the corrosion protection layer 115 may be configured to cover an entire side surface of the battery cell 110. That is, as illustrated in FIG. 4, the corrosion protection layer 115 can cover the cylindrical portion of the side surface of the battery cell 110 as well as the side surfaces of the beading portion 21 and the crimping portion 22.

In yet another aspect of the present disclosure, the corrosion protection layer 115 may cover one of the upper or lower surfaces of the battery cell 110. For example, the corrosion protection layer 115 may be provided on a surface opposite to the surface on which the top cap 30 provided with the venting portion 31 of the battery cell 110 is located. That is, the corrosion protection layer 115 does not block the venting portion 31 of the battery cell 110.

With this structure, the environment where the battery cell 110 and the cooling liquid C come into contact with each other can be effectively blocked. In addition, at the same time, since the corrosion protection layer 115 does not block the venting portion 31 of the battery cell 110, even if a thermal event occurs inside the battery cell 110 and gas is thereby generated, the generated venting gas can be smoothly discharged to the outside of the battery cell 110.

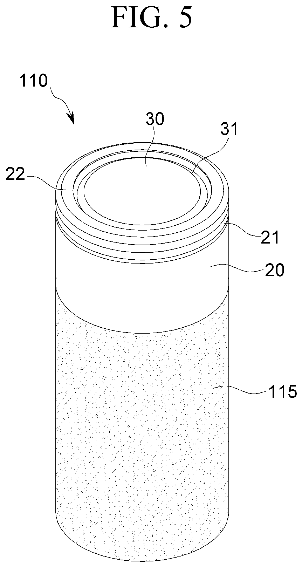

FIG. 5 is a diagram illustrating a corrosion protection layer according to another embodiment of the present disclosure. Referring to FIG. 5, the corrosion protection layer 115 may be configured to cover a part of the side surface of the battery cell 110. For example, the corrosion protection layer 115 may be provided only in a portion corresponding to an upper or lower region of a sealing bracket 300 described below. That is, the corrosion protection layer 115 may be provided only in ae first space A1 or a second space A2. This will be described in detail below with reference to various embodiments of the present disclosure.

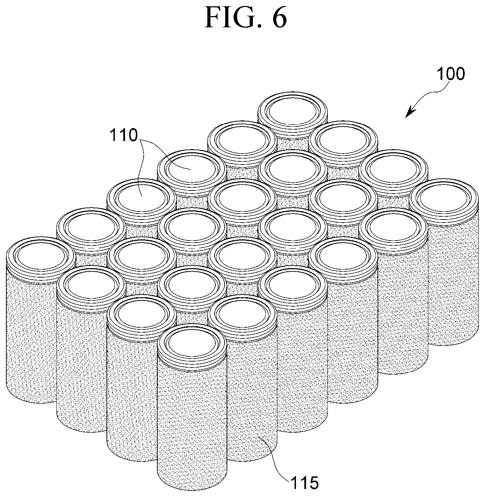

In still another aspect of the present disclosure, FIG. 6 is a diagram illustrating a structure in which the corrosion protection layer 115 is applied to the cell assembly 100 according to an embodiment of the present disclosure.

Referring to FIG. 6, the corrosion protection layer 115 may be configured to surround individual battery cells 110. That is, the corrosion protection layer 115 may be coated on the surface of each of the individual battery cells 110 constituting the cell assembly 100 of FIG. 6.

With this configuration, the cooling liquid C can also flow in a space between the battery cell 110 and the battery cell 110. Accordingly, cooling efficiency can be further improved.

Referring to FIGS. 1 and 2, the lower housing 200 has an internal empty space formed therein, and can accommodate the cell assembly 100 in the internal space. The lower housing 200 may be configured to accommodate the cell assembly 100. That is, the lower housing 200 may have an internal space to accommodate the cell assembly 100.

The lower housing 200 may include a base plate 210 extending horizontally and side plates 220 extending upward from the base plate 210. In this case, the base plate 210 may be configured to have a plate shape extending approximately in a horizontal direction. The side plate 220 may be configured to have a plate shape extending approximately vertically. The base plate 210 and the side plates 220 may be configured to be perpendicular to each other.

In another aspect of the present disclosure, the base plate 210 and the side plates 220 may be integrally configured. Alternatively, the base plate 210 and the side plates 220 may be configured to be detachable.

The cooling liquid C may be accommodated in the lower housing 200. The cooling liquid C may have insulation performance. That is, after the cell assembly 100 is accommodated in the internal space of the lower housing 200, the cooling liquid C may be accommodated in a space between the lower housing 200 and the cell assembly 100. With this structure, an area in contact with the cell assembly 100 is maximized, so cooling efficiency can be improved.

Referring again to FIGS. 1 and 2, the lower housing 200 may include a cooling liquid C inlet 200I and a cooling liquid C outlet 200U.

The cooling liquid C inlet 200I and the cooling liquid C outlet 200U may be formed in the side plates 220 of the lower housing 200, through which the cooling liquid C can be introduced and discharged. The lower housing 200 may be in an airtight state except for the cooling liquid C inlet 200I and the cooling liquid C outlet 200U because the cooling liquid C passes through the inside of the lower housing. Therefore, the cooling liquid C introduced through the cooling liquid C inlet 200I does not leak to the outside of the lower housing 200. On the other hand, the cooling liquid C introduced through the cooling liquid C inlet 200I of the lower housing 200 may cool the cell assembly 100 accommodated in the lower housing 200 and then flow out through the cooling liquid C outlet 200U.

Accordingly, the cooling liquid C can perform cooling through direct contact with the cell assembly 100 accommodated in the lower housing 200, so that cooling efficiency can be improved. That is, with this configuration, efficient cooling can be achieved when heat is generated due to high-speed charging or the like. Accordingly, high-speed charging performance of the cell block 10 can be secured.

FIG. 2 is a diagram illustrating the upper housing 230 according to an embodiment of the present disclosure.

Referring to FIG. 2, the upper housing 230 may be located on at least one side of the lower housing 200. Preferably, the upper housing 230 may be mounted on top of the lower housing 200. The upper housing 230 may be configured to cover the upper portion of the cell assembly 100. For example, the upper housing 230 may be configured to have a plate shape extending approximately horizontally. In an aspect of the present disclosure, the upper housing 230 may be configured to be detachably connected to the lower housing 200.

In another aspect of the present disclosure, the upper housing 230 may be configured to discharge venting gas. For example, the upper housing 230 may include at least one venting hole 230H.

The venting hole 230H may be configured to discharge venting gas. That is, the venting hole 230H may be configured to have a hole shape penetrating the upper housing 230 in the vertical direction. The venting hole 230H may have an elongated shape, for example. However, the shape of the venting hole 230H is not limited thereto. Note that the venting hole 230H may be provided in a region adjacent to the venting portion 31 of the battery cell 110. For example, in a structure in which the venting portion 31 of the battery cell 110 is installed facing upward, the venting hole 230H may be provided in a region above the venting portion 31.

With this structure, high-temperature gas and flame inside a module can be discharged smoothly. The venting hole 230H may be formed in plurality in the upper housing 230. For example, a plurality of venting holes 230H may be provided along the structure in which the battery cells 110 are arranged.

With this structure, even when a large amount of gas is generated in the cell block 10, the gas can be smoothly discharged to the outside of the cell block 10 through the plurality of venting holes 230H. That is, the time during which the venting gas remains in the lower housing 200 can be minimized.

In another aspect of the present disclosure, the venting hole 230H may include a mesh structure.

With this structure, the mesh structure can prevent sparks generated from the cell assembly 100 from splashing to the outside of the cell assembly 100. In addition, it can prevent the fire from spreading to other cell blocks 10 adjacent to a cell block 10 where a thermal event has occurred.

Referring to FIGS. 1 and 2, the sealing bracket 300 may be interposed between the lower housing 200 and the upper housing 230. Preferably, the sealing bracket 300 may be configured to seal a space between an outer surface of the venting portion 31 and an inner surface of the lower housing 200. That is, the sealing bracket 300 may serve to divide the internal space of the lower housing 200 into two spaces.

In an aspect of the present disclosure, the lower housing 200 may include a first space A1 in which the cooling liquid C is accommodated, and a second space A2 in which the cooling liquid C is not accommodated. In this case, the first space A1 and the second space A2 may be partitioned by the sealing bracket 300.

For example, referring to FIGS. 1 and 2, the cooling liquid C may be accommodated in a region below the sealing bracket 300. Therefore, in this case, the region below the sealing bracket 300 may be the first space A1, and a region above the sealing bracket 300 may be the second space A2. The first space A1 and the second space A2 are blocked by the sealing bracket 300. Accordingly, the first space A1 and the second space A2 may be in a state in which gas and/or liquid cannot move therebetween. That is, the sealing bracket 300 may be configured to make the region below the sealing bracket 300 airtight.

In this case, the corrosion protection layer 115 may be provided only in the first space A1. That is, since the cooling liquid C is accommodated only in the first space A1, even when the corrosion protection layer 115 is provided only in the first space A1, corrosion of the battery cell 110 can be effectively prevented. For example, in the embodiment of FIGS. 1 and 2, the corrosion protection layer 115 may be provided only in the region below the sealing bracket 300.

In an aspect of the present disclosure, the sealing bracket 300 may be located in a region above the surface of the cooling liquid C. In other words, the cooling liquid C may be accommodated only in the first space A1, which is a region below the sealing bracket 300. That is, the cooling liquid C is not accommodated in the second space A2, which is a region above the sealing bracket 300. Therefore, the cooling liquid C can cool the cell assembly 100 only in the first space A1. That is, the first space A1 may correspond to a cooling zone.

In the above embodiment, the cooling liquid C inlet 200I and the cooling liquid C outlet 200U may be located in a region below the sealing bracket 300. That is, since the cooling liquid C exists only in the region below the sealing bracket 300, the cooling liquid C inlet 200I and the cooling liquid C outlet 200U are also located in the region below the sealing bracket 300.

Referring again to FIGS. 1 and 2, the venting gas may be configured to vent from the region above the sealing bracket 300. Specifically, the venting gas may be discharged to the outside through the venting portion 31 of the battery cell 110.

According to the above configuration, while securing the sealing force of the cell block 10 by the sealing bracket 300, smooth venting can be achieved even when a thermal event occurs in the cell block 10. That is, according to the present disclosure, sealing force and venting performance can be satisfied simultaneously.

Specifically, as described above, according to the embodiment of FIGS. 1 and 2, the cooling liquid C does not flow into the second space A2, which is a region above the sealing bracket 300. Accordingly, the cooling liquid C can be effectively prevented from flowing into the venting portion 31 for venting gas discharge. In addition, since the sealing bracket 300 seals the first space A1, the cooling liquid C can be effectively prevented from leaking to the outside through the venting hole 230H of the upper housing 230. That is, according to the above configuration, the sealing force of the cell block 10 can be secured. At the same time, when a thermal event occurs in the cell block 10 and a large amount of gas is thereby generated, the gas can be discharged to the second space A2, which is a region above the sealing bracket 300, through the venting portion 31 of the battery cell 110. Thereafter, the venting gas in the second space A2 can be smoothly discharged to the outside of the cell block 10 through the venting hole 230H provided in the upper housing 230. That is, the second space A2 may correspond to a venting zone.

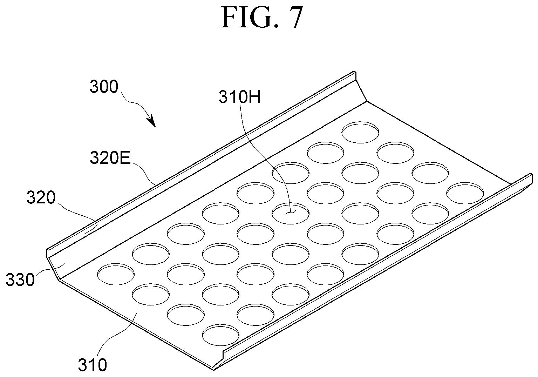

FIG. 7 is a diagram illustrating the sealing bracket 300 applied to the cell assembly 100 of FIG. 6.

Referring to FIG. 7, the sealing bracket 300 includes a base portion 310 and a sealing portion 320. The sealing bracket 300 may further include an inclined portion 330.

The sealing bracket 300 may include an elastic material. For example, the sealing bracket 300 may include a rubber material. As an embodiment of the present disclosure, an elastic material may be applied to the sealing portion 320 and a receiving portion 310H of the sealing bracket 300.

The base portion 310 may be configured as a plate-shaped structure extending approximately horizontally. The base portion 310 may have the receiving portion 310H configured to allow the cell assembly 100 to pass therethrough. For example, the receiving portion 310H may be provided in a central region of the base portion 310.

In an aspect of the present disclosure, the receiving portion 310H may be configured to seal the first space A1. For example, according to the embodiment of FIGS. 1 and 2, the receiving portion 310H may be configured to seal a region below the sealing bracket 300. That is, when the cell assembly 100 is inserted into the receiving portion 310H, no gap is formed between the cell assembly 100 and the receiving portion 310H. That is, the receiving portion 310H is in contact with the cell assembly 100 without a gap to clearly separate the first space A1 and the second space A2. Accordingly, airtightness performance of the first space A1 can be secured.

For example, in the embodiment of FIG. 6, the corrosion protection layer 115 is configured to surround individual battery cells 110, and the respective battery cells 110 may be arranged spaced apart from each other at predetermined intervals. In this case, the sealing bracket 300 having a shape illustrated in FIG. 7 may be applied. That is, referring to FIG. 7, the sealing bracket 300 may have a plurality of receiving portions 310H spaced apart at predetermined intervals. The receiving portions 310H may accommodate individual battery cells 110 covered with the corrosion protection layer 115, respectively. The receiving portions 310H may be configured to seal spaces between the individual battery cells 110 and the base portion 310. That is, in the case where the battery cell 110 is a cylindrical battery cell 110, the receiving portion 310H having a substantially circular hole shape may be provided in plurality.

Note that, referring to FIG. 7, a region of an edge of the base portion 310 where the sealing portion 320 is not extended may also be configured to maintain airtightness of the first space A1 through close contact with the lower housing 200. In this case, an elastic material may be applied to the region of the edge of the base portion 310 of the sealing bracket 300 where the sealing portion 320 is not extended.

In another aspect of the present disclosure, the sealing portion 320 may come into contact with the inner surface of the lower housing 200. The sealing portion 320 may be configured to seal the first space A1. For example, according to the embodiment of FIGS. 1 and 2, the sealing portion 320 may be configured to seal a region below the sealing bracket 300. The sealing bracket 300 may seal and block a region below the sealing bracket 300 from a region above the sealing bracket 300. Accordingly, the cooling liquid C can be sealed in the region below the sealing bracket 300 by the sealing bracket 300. That is, the cooling liquid C is prevented from moving to the second space A2 by the sealing portion 320.

As another embodiment of the present disclosure, the sealing portion 320 may be configured to have a structure extending in all directions from the edge of the receiving portion 310H. For example, when the receiving portion 310H has a plate shape having a substantially rectangular structure, a sealing portion 320 extending from each of the four corners of the rectangle may be provided. In this embodiment, the sealing portion 320 may contact and seal all of the side plates 220 constituting the lower housing 200. According to the above configuration, the sealing force of the sealing bracket 300 can be further enhanced.

Preferably, the edge of the sealing bracket 300 may be configured to have a bent structure toward the second space A2. For example, in the embodiment of FIGS. 1 and 2, the edge of the sealing bracket 300 may be configured to have an upwardly bent structure. More preferably, the sealing portion 320 may be configured to have an upwardly bent structure. For example, referring to FIG. 7, the sealing portion 320 may be configured to be parallel to the side surfaces of the lower housing 200. That is, the sealing portion 320 may be configured to come into surface contact with the lower housing 200. With this configuration, the sealing force of the sealing bracket 300 can be enhanced by the surface contact between the sealing portion 320 and the lower housing 200.

In still another aspect of the present disclosure, the sealing bracket 300 may further include the inclined portion 330 between the base portion 310 and the sealing portion 320.

Referring to FIG. 7, the base portion 310 may extend approximately in a horizontal direction, and the sealing portion 320 may extend approximately in a vertical direction. Accordingly, a region connecting the base portion 310 and the sealing portion 320 may have a substantially inclined structure. That is, the inclined portion 330 may have a structure extending from an edge of the base portion 310 toward the sealing portion 320.

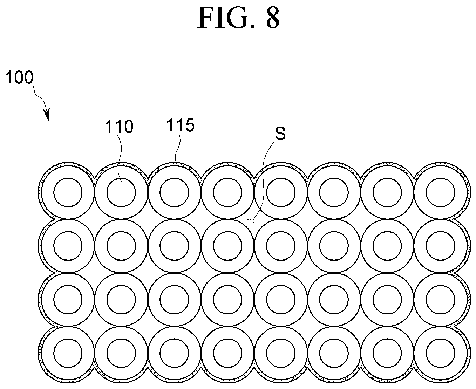

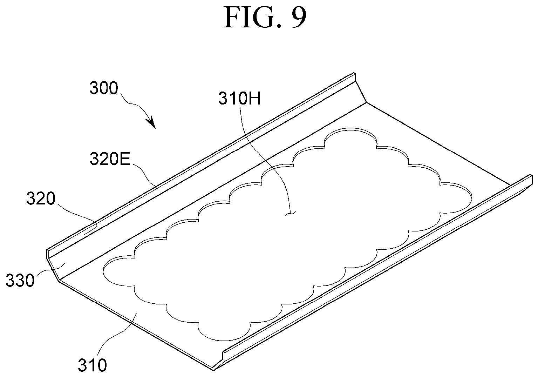

FIG. 8 is a diagram illustrating a structure in which the corrosion protection layer 115 is applied to the cell assembly 100 according to another embodiment of the present disclosure, and FIG. 9 is a diagram illustrating the sealing bracket 300 applied to the cell assembly 100 of FIG. 8.

Referring to FIGS. 8 and 9, the corrosion protection layer 115 may be configured to integrally wrap around a side surface of the cell assembly 100, which is an assembly of the plurality of battery cells 100. That is, the corrosion protection layer 115 may function as a configuration that binds together the cell assembly 100, which is an assembly of the plurality of battery cells 100. Accordingly, there may be regions on the surfaces of individual battery cells 110 that are not covered by the corrosion protection layer 115. However, since the cell assembly 100 is packed by the corrosion protection layer 115, and the corrosion protection layer 115 includes a material that the cooling liquid C cannot penetrate, the cooling liquid C cannot penetrate into the interior space of the cell assembly 100 wrapped by the corrosion protection layer 115. Accordingly, the regions on the surfaces of individual battery cells 110 that are not covered by the corrosion protection layer 115 can be prevented from coming into contact with the cooling liquid C.

According to the above configuration, productivity can be improved compared to the case where each of the individual battery cells 110 is covered with the corrosion protection layer 115. In addition, the gap between the battery cells 110 can be further reduced, which can be advantageous in terms of energy density.

Referring to FIG. 9, a receiving portion 310H for receiving the cell assembly 100 having a structure as shown in FIG. 8 may be configured as one open hole. In this case, the shape of the receiving portion 310H is configured to have a shape that matches the side surface shape of the cell assembly 100 including the plurality of battery cells 110. For example, in the embodiment of FIG. 9, the receiving portion 310H may be configured as a hole having a scalloped edge. Accordingly, the sealing force between the cell assembly 100 and the receiving portion 310H can be ensured.

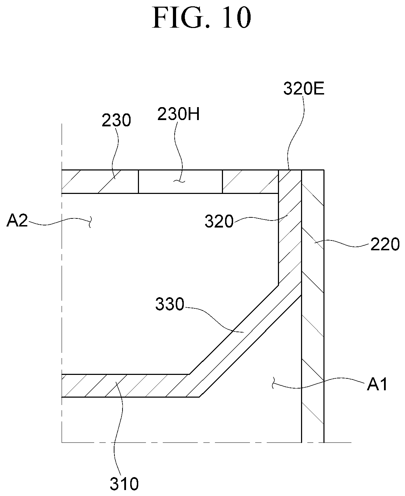

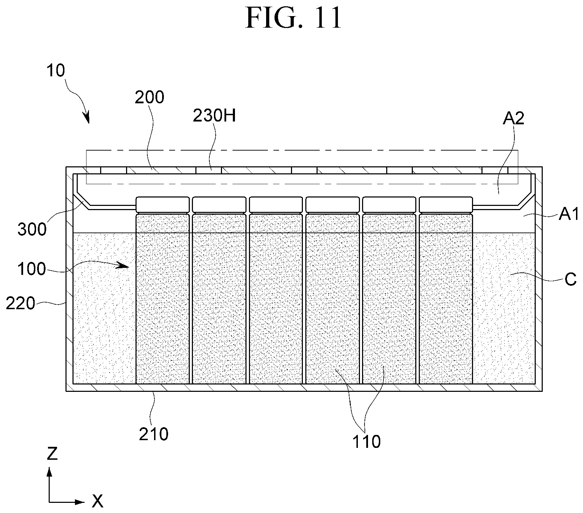

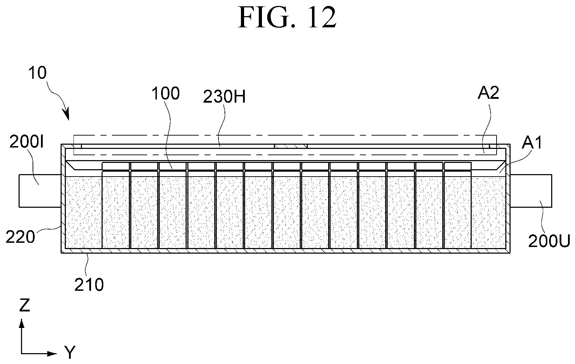

FIG. 10 is a diagram illustrating an application structure of the sealing bracket 300 according to an embodiment of the present disclosure. FIG. 11 is a cross-sectional view of the cell block 10 of FIG. 1 taken along line A-A', and FIG. 12 is a cross-sectional view of the cell block 10 of FIG. 1 taken along line B-B'.

Referring to FIGS. 10 to 12, the cell assembly 100 may be accommodated in the lower housing 200, and the cooling liquid C may be accommodated in the space between the cell assembly 100 and the lower housing 200. That is, the cooling liquid C may be accommodated in the first space A1. In this case, the first space A1 may be a region above or below the sealing bracket 300. With this structure, an area in contact with the cell assembly 100 is maximized, so cooling efficiency can be improved.

The sealing bracket 300 may be interposed between the lower housing 200 and the upper housing 230. The sealing bracket 300 may be configured to seal a space between an outer surface of the cell assembly 100 and an inner surface of the lower housing 200. Preferably, the sealing bracket 300 may be configured to seal a space between an outer surface of the venting portion 31 and an inner surface of the lower housing 200. The first space A1 and the second space A2 are blocked by the sealing bracket 300. The sealing bracket 300 maintains the region below the sealing bracket 300 airtight. That is, according to the present disclosure, the airtight condition, which is a condition for applying a direct cooling method, can be achieved. Accordingly, the improvement in cooling efficiency due to direct cooling can be satisfied.

Note that when a thermal event occurs inside the cell block 10 and gas is thereby generated, the venting gas can be vented in the region above the sealing bracket 300. Specifically, the venting gas can be discharged to the outside through at least one venting hole 230H provided on the upper portion of the venting portion 31.

In this case, since the sealing bracket 300 seals the first space A1, the cooling liquid C can be effectively prevented from leaking to the outside through the venting hole 230H of the upper housing 230. That is, according to the above configuration, the sealing force of the cell block 10 can be secured. At the same time, when a thermal event occurs in the cell block 10 and a large amount of gas is thereby generated, the gas can be discharged to the second space A2, which is a region above the sealing bracket 300, through the venting portion 31 of the battery cell 110. Thereafter, the venting gas in the second space A2 can be smoothly discharged to the outside of the cell block 10 through the venting hole 230H provided in the upper housing 230.

According to the above configuration, while securing the sealing force of the cell block 10 by the sealing bracket 300, smooth venting can be achieved even when a thermal event occurs in the cell block 10. That is, according to the present disclosure, sealing force and venting performance can be satisfied simultaneously. That is, according to the sealing structure of the present disclosure, safety can be secured even when thermal propagation occurs.

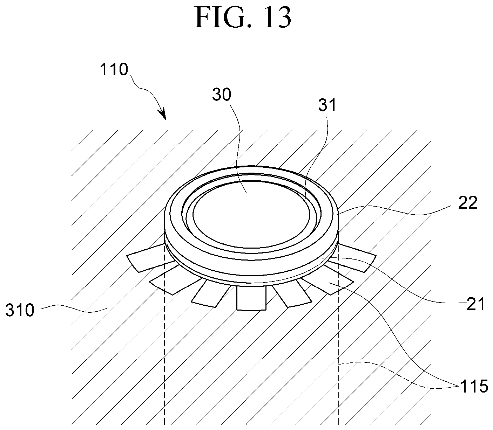

FIG. 13 is a diagram illustrating the corrosion protection layer according to still another embodiment of the present disclosure.

Referring to FIG. 13, the corrosion protection layer 115 may be configured to extend upward from the first space A1 below the sealing bracket 300 to the upper surface of the sealing bracket 300. For example, in the embodiment of FIGS. 1 and 2, the corrosion protection layer 115 may be configured to extend upward from the first space A1 below the sealing bracket 300 to the upper surface of the sealing bracket 300.

With this configuration, the corrosion protection layer 115 can be reliably applied to the entire first space A1 where the cooling liquid C is located. Accordingly, corrosion of the cell assembly 100 can be reliably prevented.

Note that the application structure of the sealing bracket 300 of the present disclosure can be applied not only to a top venting structure but also to a bottom venting structure.

For example, the sealing bracket 300 of the present disclosure can be applied to a structure in which the venting portion 31 of the battery cell 110 is positioned toward the bottom of the cell block 10, rather than a structure in which the venting portion 31 of the battery cell 110 is positioned toward the top. In this case, since venting is performed in the lower area of the cell block 10, the venting portion 31 of the cell assembly 100 is also positioned toward the lower portion of the cell block 10. Additionally, the sealing bracket 300 may also be provided in a region adjacent to the region where the venting portion 31 is located. In this case, the sealing portion 320 of the sealing bracket 300 may be configured to extend toward the lower portion of the cell block 10. Alternatively, as another embodiment, the sealing portion 320 of the sealing bracket 300 may be configured to extend toward the upper portion of the cell block 10. Note that, in the bottom venting structure, a venting hole 230H of the cell block 10 may be provided in the base plate 210 of the cell block 10. In this structure, the cooling liquid C may be accommodated in the second space A2, which is a region above the sealing bracket 300.

That is, the present disclosure is not limited to the top venting structure illustrated in FIGS. 1 to 13, and is also applicable to a bottom venting structure in which venting is performed toward the bottom.

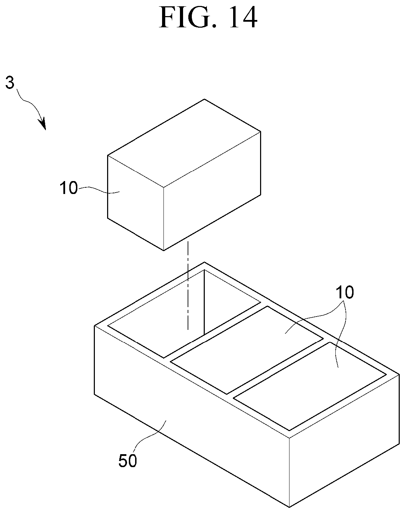

FIG. 14 is a diagram illustrating a battery pack 3 including the cell block 10 of FIG. 1.

Referring to FIG. 14, the battery pack 3 according to an embodiment of the present disclosure may include at least one cell block 10 according to the embodiment of the present disclosure described above. In addition, the battery pack 3 according to an embodiment of the present disclosure may include a pack case 50 capable of accommodating at least one cell block 10. Furthermore, in addition to the cell block 10, other various components, such as components of the battery pack 3 known at the time of application of the present disclosure, such as a BMS, a pack case, a relay, and a current sensor, may be further included.

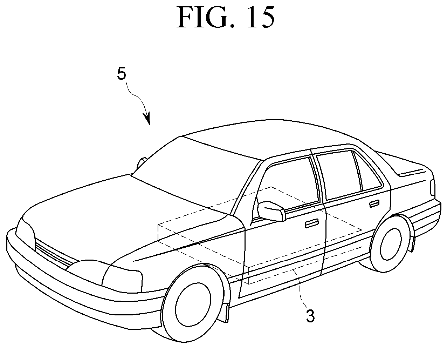

FIG. 15 is a diagram illustrating a vehicle 5 including the battery pack 3 of FIG. 14.

Referring to FIG. 15, the vehicle 5 according to an embodiment of the present disclosure may include at least one battery pack 3 according to an embodiment of the present disclosure.

The cell block 10 according to an embodiment of the present disclosure may be applied to the vehicle 5, such as an electric vehicle 5 or a hybrid electric vehicle 5. That is, the vehicle 5 according to an embodiment of the present disclosure may include the cell block 10 according to an embodiment of the present disclosure or the battery pack 3 according to an embodiment of the present disclosure. In addition, the vehicle 5 according to an embodiment of the present disclosure may further include various other components included in the vehicle 5, in addition to the cell block 10 or the battery pack 3. For example, the vehicle 5 according to an embodiment of the present disclosure may further include a body, a motor, a control device such as an ECU (electronic control unit), and the like, in addition to the cell block 10 according to an embodiment of the present disclosure.

Note that although the terms indicating directions such as upper and lower are used herein, these terms are used only for convenience of description, and it is apparent to one skilled in the art that these terms may change depending on the position of the target object or the position of the observer.

Although the present disclosure has been described with reference to the limited embodiments and drawings, the present disclosure is not limited thereto, and a variety of modifications and variations can be made within the technical spirit of the present disclosure and the equivalent range of the claims described below by one skilled in the art to which the present disclosure belongs.

## Claims

1. A cell block comprising:
a cell assembly comprising a plurality of battery cells and having a corrosion protection layer on a surface;
a lower housing having a space therein to accommodate the cell assembly;
a cooling liquid in the lower housing;
an upper housing on top of the lower housing and comprising at least one venting hole; and
a sealing bracket between the lower housing and the upper housing and sealing a space between an outer surface of the cell assembly and an inner surface of the lower housing.

2. The cell block of claim 1, wherein the corrosion protection layer is on surfaces of the battery cells.

3. The cell block of claim 1, wherein the corrosion protection layer is a film attached to surfaces of the battery cells.

4. The cell block of claim 1, wherein the corrosion protection layer is coated on surfaces of the battery cells.

5. The cell block of claim 1, wherein the corrosion protection layer covers all side surfaces of the battery cells.

6. The cell block of claim 1, wherein the corrosion protection layer surrounds the individual battery cells.

7. The cell block of claim 1, wherein
the lower housing comprises a first space in which the cooling liquid is accommodated, and a second space in which the cooling liquid is not accommodated, and
the first space and the second space are partitioned by the sealing bracket.

8. The cell block of claim 1, wherein the sealing bracket is in a region above a surface of the cooling liquid.

9. The cell block of claim 7, wherein
the sealing bracket comprises
a base portion having a receiving portion configured to allow the cell assembly to pass therethrough, and
a sealing portion in contact with the inner surface of the lower housing and sealing the first space.

10. The cell block of claim 7, wherein the corrosion protection layer is only in the first space.

11. The cell block of claim 9, wherein the receiving portion seals the first space.

12. The cell block of claim 7, wherein an edge of the sealing bracket is bent toward the second space.

13. The cell block of claim 1, wherein the corrosion protection layer wraps around a side surface of the cell assembly as a single unit.

14. A battery pack comprising at least one cell block of claim 1.

15. A vehicle comprising at least one battery pack of claim 14.
